# EUROPEAN PATENT SPECIFICATION

(11) **EP 4 385 182 B1**
(45) Date of publication and mention of the grant of the patent: **25.03.2026**
(21) Application number: 22787044.1
(22) Date of filing: 09.09.2022
(51) Int. Cl.: H04L 41/0663

(54) **SPECIFYING FLOWS AND CONDITIONAL ACTIONS**
SPEZIFIZIERUNG VON STRÖMEN UND BEDINGTEN AKTIONEN
SPÉCIFICATION DE FLUX ET ACTIONS CONDITIONNELLES

(30) Priority: 10.09.2021 US 202163242889 P
(43) Date of publication of application: 19.06.2024
(73) Proprietor: Huawei Technologies Co., Ltd., Shenzhen, Guangdong 518129 (CN)
(72) Inventor: EASTLAKE III, Donald E., Plano, Texas 75024 (US)
(74) Representative: MERH-IP Matias Erny Reichl Hoffmann Patentanwälte PartG mbB
(86) International application number: PCT/US2022/043018
(87) International publication number: WO 2022/256753

(56) References cited:
- CN-A- 110 971 540
- US-B1- 7 254 748
- LEE SEUNGSOO ET AL: "AudiSDN: Automated Detection of Network Policy Inconsistencies in Software-Defined Networks", IEEE INFOCOM 2020 - IEEE CONFERENCE ON COMPUTER COMMUNICATIONS, IEEE, 6 July 2020 (2020-07-06), pages 1788 - 1797, XP033806522, DOI: 10.1109/INFOCOM41043.2020.9155378

## Description

### TECHNICAL FIELD

The present disclosure is generally related to network communications, and specifically various systems and methods for specifying flows and conditional actions.

### BACKGROUND

The Border Gateway Protocol (BGP) is an inter-Autonomous System (AS) routing protocol used for routing traffic (e.g., data packets) between Autonomous Systems (ASes). An AS is an area or portion of a network that includes a set of routers under the control of one or more network operators on behalf of a single administrative entity (i.e., under common management). For example, the entity may be an Internet service provider (ISP), a large company, a university, a government agency, or any other entity. A set of ASes with some commonality of management or agreement may be called a confederation. An AS must have an autonomous system number (ASN) and, if connected to the Internet, that ASN must be an officially registered unique number to avoid confusion. Early AS numbers were 2 bytes long but, with the growth of the Internet, this was found to be inadequate, and the AS number size was increased to 4 bytes. The 4-byte AS number space includes the 2-byte space because a 2-byte AS number can be represented in 4 bytes by placing it in the lower two bytes and setting the top two bytes to zero.
Document US 7254748 B1 relates to a method for operating a content-addressable memory (CAM). Copies of a CAM database are duplicated and placed in a first set of CAM locations and a second set of CAM locations. An error detector is used to determine false matches in the case of soft errors within the entries producing those false matches. While the entries producing a match should have the same index location, errors might cause those match lines to have an offset. If so, the present CAM, through use of duplicative sets of CAM locations, will detect the offset and thereafter the values in each index location that produces a match, along with the corresponding parity or error detection encoding bit(s). If the parity or error detection encoding bit(s) indicate an error in a particular entry, then that error is located and the corresponding entry at the same index within the other, duplicative set of CAM locations is copied into the erroneous entry.
Document CN 110971540 A relates to a data information transmission method. The data information transmission method is applied to a switch supporting an open flow Openflow protocol, and the method comprises the following steps: obtaining flow table matching information of a data packet in the switch, wherein the flow table matching information is information supporting an open flow Openflow protocol; and packaging the flow table matching information into a protocol message, and sending the protocol message to a software defined network SDN controller.

### SUMMARY

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. A first aspect relates to a method of processing packets implemented by a first node. The method includes storing a BGP flow specification; receiving a packet from a second node in a network; performing a BGP flow specification matching process to determine whether the BGP flow specification matches the packet; encountering a component error with a component in the BGP flow specification during the BGP flow specification matching process; determining an error handling action to perform for the component based on error handling information stored in or with the BGP flow specification; and performing the error handling action for the component.

A second aspect relates to a network node comprising at least a processor and a memory storing instructions, wherein the instructions when executed by the processor causes the network node to store a BGP flow specification; receive a packet from a second network node in a network; perform a BGP flow specification matching process to determine whether the BGP flow specification matches the packet; encounter a component error with a component in the BGP flow specification during the BGP flow specification matching process; determine an error handling action to perform for the component based on error handling information stored in or with the BGP flow specification; and perform the error handling action for the component.

A third aspect relates to a non-transitory computer-readable medium storing computer instructions, that when executed by one or more processors, cause the one or more processors to perform the steps of storing a Border Gateway Protocol (BGP) flow specification; receiving a packet from a second network node in a network; performing a BGP flow specification matching process to determine whether the BGP flow specification matches the packet; encountering a component error with a component in the BGP flow specification during the BGP flow specification matching process; determining an error handling action to perform for the component based on error handling information stored in or with the BGP flow specification; and performing the error handling action for the component.

Optionally, in a first implementation according to any of the preceding aspects, the component error is a first component error type where the component has a component type not known to the first node.

Optionally, in a second implementation according to any of the preceding aspects or any implementation thereof, the component error is a second component error type where the component has a component type known to the first node and the component indicates a test against a field absent from the data associated with the packet.

Optionally, in a third implementation according to any of the preceding aspects or any implementation thereof, the error handling action is treating the component as having failed to match the packet.

Optionally, in a fourth implementation according to any of the preceding aspects or any implementation thereof, the error handling action is treating the component as having succeeded in matching the packet.

Optionally, in a fifth implementation according to any of the preceding aspects or any implementation thereof, the error handling action is skipping that the component and continuing with any subsequent component matching in the BGP flow specification.

Optionally, in a sixth implementation according to any of the preceding aspects or any implementation thereof, the component encodes an action to perform when the BGP flow specification matches the packet.

Optionally, in a seventh implementation according to any of the preceding aspects or any implementation thereof, the error handling action is skipping to a next action and ignore the component error.

Optionally, in an eighth implementation according to any of the preceding aspects or any implementation thereof, the error handling information comprises a value in a Type-Error field of the component that indicates the error handling action when the component error is the first component error type.

Optionally, in a ninth implementation according to any of the preceding aspects or any implementation thereof, the error handling information comprises a value in a Missing-Error field of the component that indicates the error handling action when the component error is the second component error type.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram illustrating a BGP UPDATE message in accordance with an embodiment of the present disclosure.
FIG. 2 is a schematic diagram of an UPDATE message attribute in accordance with an embodiment of the present disclosure.
FIG. 3A is a schematic diagram of the structure of MP_REACH_NLRI attribute in accordance with an embodiment of the present disclosure.
FIG. 3B is a schematic diagram of the structure of MP_UNREACH_NLRI attribute in accordance with an embodiment of the present disclosure.
FIG. 4 is a schematic diagram of an Extended Communities attribute in accordance with an embodiment of the present disclosure.
FIG. 5 is a schematic diagram of an Internet Protocol version six (IPv6) Address Specific BGP Extended Community attribute in accordance with an embodiment of the present disclosure.
FIG. 6 is a schematic diagram of a BGP Community Container Attribute Common Header in accordance with an embodiment of the present disclosure.
FIG. 7 is a schematic diagram of a BGP Wide Community Container in accordance with an embodiment of the present disclosure.
FIG. 8 is a schematic diagram of a BGP Wide Community TLV in accordance with an embodiment of the present disclosure.
FIG. 9 is a schematic diagram illustrating a Prefix Component in accordance with an embodiment of the present disclosure.
FIG. 10 is a schematic diagram illustrating an Arithmetic Component in accordance with an embodiment of the present disclosure.
FIG. 11 is a schematic diagram illustrating a Boolean Component in accordance with an embodiment of the present disclosure.
FIG. 12 is a schematic diagram of an encoding of a Prefix Component in accordance with an embodiment of the present disclosure.
FIG. 13 is a schematic diagram of an encoding of a Component in accordance with an embodiment of the present disclosure.
FIG. 14 is a schematic diagram of an encoding of a FlowSpec Action in accordance with an embodiment of the present disclosure.
FIG. 15 is a flowchart illustrating a method of processing packets in accordance with an embodiment of the present disclosure.
FIG. 16 is a schematic diagram of a network node in accordance with an embodiment of the present disclosure.

### DETAILED DESCRIPTION

It should be understood at the outset that although an illustrative implementation of one or more embodiments are provided below, the disclosed systems, computer program product, and/or methods may be implemented using any number of techniques, whether currently known or in existence. The disclosure should in no way be limited to the illustrative implementations, drawings, and techniques illustrated below, including the exemplary designs and implementations illustrated and described herein.

The present disclosure relates to Internet Engineering Task Force (IETF) Border Gateway Protocol (BGP) FlowSpec and similar technologies. As will be further described, the BGP enables distribution of information between BGP speakers to assist in making forwarding decisions for computer networking traffic. The current version of BGP is version 4 (BGPv4). Unless clearly indicated otherwise, the remaining discussion in this document concerns BGPv4.

Embodiments of the present disclosure improve error handling, and improve the order of application of actions and filters. For instance, the disclosed embodiments enable the supplementing of traffic matching rules and subsequent actions with information for handling unknown types of matching rules and actions, matching rules and actions that reference unknown types of fields, and matching rules and actions that reference known but absent types of fields in a packet and other improvements.

A BGP speaker is a device (e.g., a router) that can compose and send BGP messages and can receive and parse BGP messages. The distributed information is formatted into a sequence of BGP messages that may be sent using IP and Transmission Control Protocol (TCP), or in other ways. A BGP speaker receiving such information stores some or all of the information, and can modify and re-originate some of that information to other BGP speakers.

Currently, there are five types of BGP messages (OPEN, UPDATE, NOTIFICATION, KEEPALIVE, and ROUTE-REFRESH). It is common to capitalize all letters for BGP message types. The OPEN message sets up and establishes BGP adjacency (e.g., communicating identity, BGP version number, capabilities, etc.). The UPDATE message advertises, updates, or withdraws routes. The NOTIFICATION message indicates an error condition to a BGP neighbor. The KEEPALIVE message ensures that BGP neighbors are still alive. The ROUTE-REFRESH message is used to dynamically request a BGP route advertiser to resend update messages. For Flow Specifications and Actions (FlowSpec) in BGP as described in the present disclosure, the most relevant of the message types is the BGP UPDATE message.

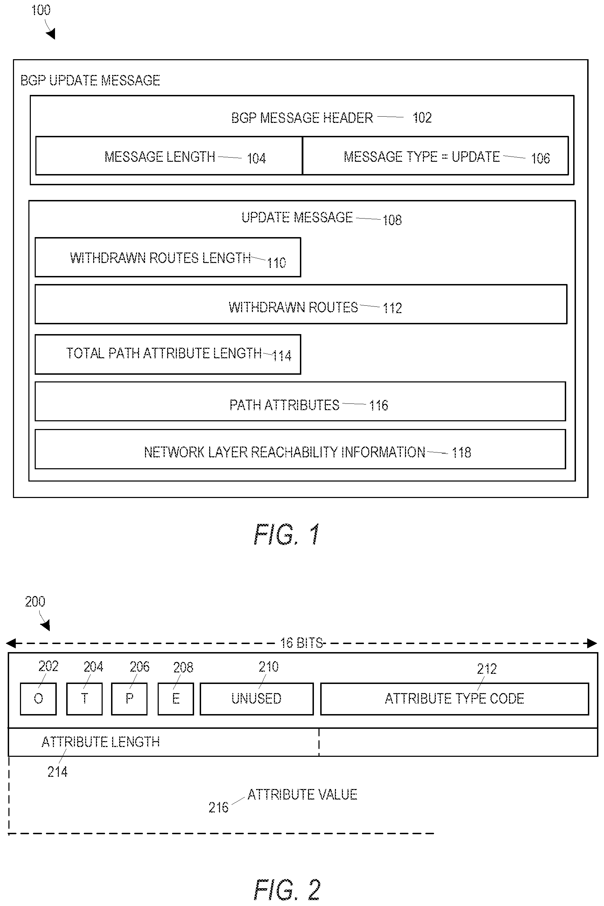

FIG. 1 is a schematic diagram illustrating a BGP UPDATE message 100 in accordance with an embodiment of the present disclosure. In FIG. 1, and other figures in this document, there may be additional fields not shown in the present disclosure. The BGP UPDATE message 100 advertises any feasible routes of a BGP speaker, withdraws previously advertised routes, or does both. The BGP UPDATE message 100 includes a BGP message header 102 and an update message 108.

The BGP message header 102 includes a message length field 104 and a message type field 106. The message length field 104 indicates the total length of a BGP message (including the header), in octets. The message type field 106 indicates the message type. The value of this field is an integer ranging from 1 to 5. The BGP UPDATE message 100 is assigned a message type value of 2.

The update message 108 includes a withdrawn routes length field 110, a withdrawn routes field 112, a total path attribute length field 114, a path attributes field 116, and a network layer reachability information (NLRI) field 118. The withdrawn routes length field 110 is a 2-byte field. The withdrawn routes length field 110 indicates the total length of the withdrawn Internet Protocol Version 4 (IPv4) routes field 112 in bytes. IPv4 withdrawn routes are routes that are down or no longer reachable. When there are no withdrawn routes, the withdrawn routes length field 110 is set to zero.

The withdrawn routes field 112 is a variable-size field. The withdrawn routes field 112 contains all the prefixes that should be removed from a BGP IPv4 routing table. The encoding mode is the same as that used for the NLRI field 118 as described below.

The total path attribute length field 114 is a 2-byte field. The total path attribute length field 114 indicates the total length of the path attributes field 116. AS path attributes may be used to provide route metrics and other information. Path attributes allow BGP to determine the best path. The path attributes are encoded in Type Length Value (TLV)-format of variable length. Each of the path attributes can also have attribute flags that inform the BGP router about how to treat the attribute.

The path attributes field 116 is a variable-size field. The path attributes field 116 indicates the BGP attributes for any IPv4 prefixes and other information. All BGP path attributes fall into one of four main categories: well-known mandatory path attributes, well-known discretionary path attributes, optional transitive path attributes, and optional non-transitive path attributes. Well-known means that all routers must recognize this path attribute. Optional means that the BGP implementation on the device doesn't have to recognize that path attribute at all. Mandatory means that the update must contain that attribute. If the attribute does not exist, a notification error message will result, and the peering will be torn down. Discretionary means the attribute does not have to be in the update. Transitive means the BGP routers need to pass that path attribute on toward its next neighbors. Non-transitive means the BGP routers can just ignore that attribute value.

Thus, well-known mandatory path attributes must be recognized by all BGP routers and must be included in every BGP update message. Examples of well-known mandatory path attributes include ORIGIN, AS_PATH, and NEXT_HOP path attributes. Routing information errors occur without these attributes. Well-known discretionary path attributes can be recognized by all BGP routers and can be included in every update message as needed. Examples of well-known discretionary path attributes include LOCAL_PREF and ATOMIC_AGGREGATE path attributes. Optional transitive path attributes are transitive attribute between ASs. A BGP router not supporting this attribute can still receive routes with this attribute and advertise them to other peers. An example of an optional transitive path attributes is the Community path attribute defined in Internet Engineering Task Force (IETF) document Request for Comments (RFC) 1997. A BGP community is a group of destinations that share a common property. For optional non-transitive path attributes, when a BGP router does not support this attribute, the BGP router will not advertise routes with this attribute. Examples of optional non-transitive path attributes include MULTI_EXIT_DISC (Med), ORIGINATOR_ID, And CLUSTER_LIST path attributes.

The NLRI field 118 is a variable-size field. The NLRI field 118 indicates a list of IPv4 address prefixes in the BGP update message 100. Each address prefix in the list is encoded as a 2-tuple LV (<prefix length, the prefix of the reachable route>). BGP was originally designed for communicating routing information for IPv4so both the withdrawn routes field 112 and NLRI field 118 are lists of IPv4 address prefixes. An IPv4 prefix in the NLRI field 118 implies that the originator of the BGP UPDATE message 100 is a router to which packets whose IPv4 address start with that prefix may be sent. The size of the NLRI field 118 may be determined by deducting the size of the withdrawn routes field 112 and the path attributes field 116 from the overall length indicated in the message length field 104. It should be noted that the term "NLRI" originally referred to the information in the NLRI field 118, but later extensions of BGP refer to information elsewhere as "NLRI" even when the information is not always reachability information or not about the network layer.

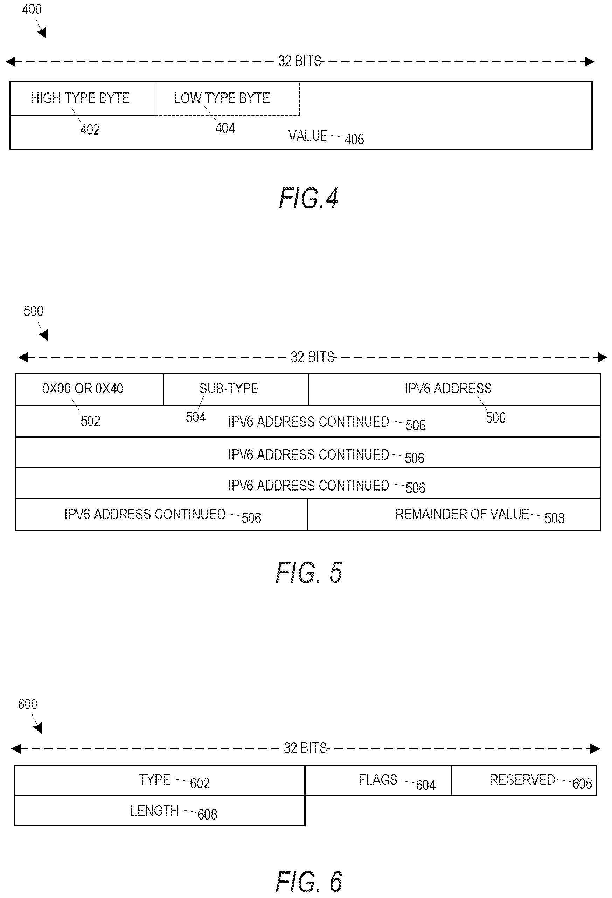

FIG. 2 is a schematic diagram of an UPDATE message attribute 200 in accordance with an embodiment of the present disclosure. The update message attribute 200 can be used for describing information in the path attributes field 116 of the BGP UPDATE message 100 in FIG. 1. The UPDATE message attribute 200 includes an optional bit (O) field 202, a transitive bit (T) field 204, a Partial bit (P) field 206, extended length bit (E) field 208, an unused field 210, an attribute type code field 212, an attribute length field 214, and an attribute value field 216. The O field 202, a T field 204, a P field 206, and E field 208 are 1-bit flag fields. The O field 202 defines whether the attribute is optional. The T field 204 defines whether the attribute is transitive. The P field 206 defines whether the information in an optional-transitive attribute is partial. The E field 208 defines whether the length of the attribute is extended. The unused field 210 is a 4-bit field that is currently not used. The attribute type code field 212 is an 8-bit field that indicates the attribute type. Examples of attribute types include ORIGIN (attribute type code 1), AS_PATH (attribute type code 2), NEXT_HOP (attribute type code 3), LOCAL_PREF (attribute type code 5), COMMUNITY (attribute type code 8), EXTENDED COMMUNITIES (attribute type code 16) (FIG. 4), IP VERSION 6 (IPv6) ADDRESS SPECIFIC EXTENDED COMMUNITY (attribute type code 25) (FIG. 5), LARGE_COMMUNITY (attribute type code 32)(defined in IETF RFC 5701), and BGP COMMUNITY CONTAINER ATTRIBUTE (attribute type code 34). It is common to capitalize all letters for BGP path attribute types.

The BGP COMMUNITY CONTAINER ATTRIBUTE is specified in an IETF Internet Draft (draft-ietf-idr-wide-bgp-communities) that has been approved by the IETF Inter Domain Routing (IDR) Working Group (WG), but is not yet fully approved by the IETF, and may be subject to change. BGP prohibits more than one occurrence of an attribute with a particular type code within a BGP UPDATE message. The attribute length field 214 indicates the length of the update message attribute 200. When the E field 208 has the value one, then the attribute length field 214 is 2 bytes in size; when the E field 208 bit has value zero, the attribute length field 214 is 1 byte in size. The attribute value field 216 is a variable size field. The value in the attribute value field 216 varies depending on the attribute type indicated in the attribute type code field 212.

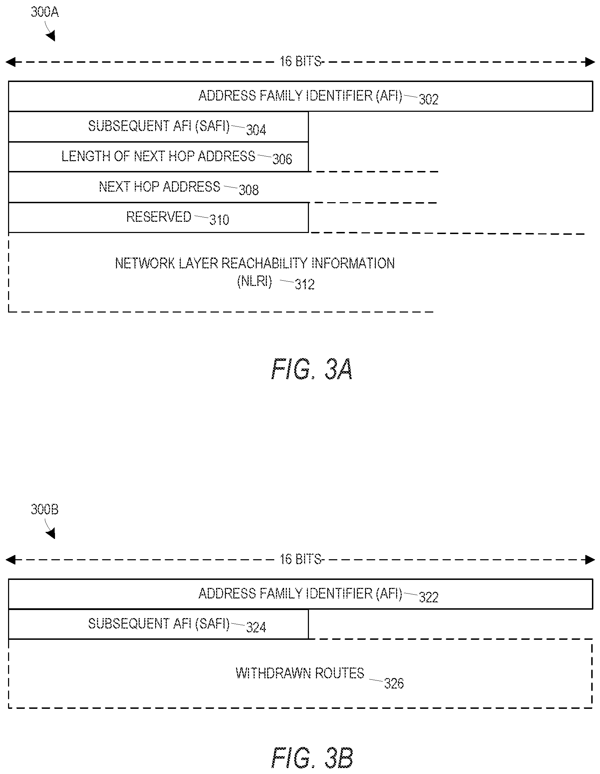

To handle protocols other than IPv4, BGP was extended to multiprotocol (MP) (MP-BGP). In particular, to enable BGP to support routing for multiple network layer protocols, BGP needed to add the ability to associate a particular network layer protocol with the next hop information, and the ability to associate a particular network layer protocol with NLRI. These capabilities were added by extending the BGP UPDATE message 100 through the use the MP_REACH_NLRI attribute (attribute type code 14) (FIG. 3A) and MP_UNREACH_NLRI attribute (attribute type code 15) (FIG. 3B). The MP_REACH_NLRI attribute is used to disseminate information (also known as "routes") and the MP_UNREACH_NLRI attribute is used to withdraw such information. Both of the MP_REACH_NLRI attribute and the MP_UNREACH_NLRI attribute are optional and non-transitive. This way, a BGP speaker that doesn't support the multiprotocol capabilities will just ignore the information carried in these attributes and will not pass the information to other BGP speakers. BGP was also extended for MP by extending the Open messages so that BGP could include a list of Address Family Identifier (AFI) / Subsequent Address Family Identifier (SAFI) pairs, which were the AFI/SAFI pairs in which the originator of the Open message was interested. Generally, only BGP messages relevant to those AFI/SAFI pairs may then be sent to that BGP speaker. Additional information on MP-BGP is described in IETF RFC 4760.

In some embodiments, BGP may be extended in many ways including, but not limited to, new versions of BGP, new message types in BGPv4, new attributes (including but not limited to new "community" attributes) or TL Vs or the like inside existing message types or existing fields, and new fields or extensions or the specification of uses for currently unused fields within any of the above.

FIG. 3A is a schematic diagram of the structure of MP_REACH_NLRI attribute 300A in accordance with an embodiment of the present disclosure. The MP_REACH_NLRI attribute 300A can be used to advertise a feasible route to a peer or other information. The MP_REACH_NLRI attribute 300A includes an AFI field 302, a SAFI field 304, a length of next hop address field 306, a next hop address field 308, a reserved field 310, and an NLRI field 312.

The AFI field 302 is a 16-bit field. The AFI field 302 may be used to generally identify the type of address information involved, such as IPv4 addresses, IPv6 addresses, or other types of addresses. In particular, the AFI field 302 in combination with the SAFI field 304 identifies the set of network layer protocols to which the address carried in the next hop address field 308 must belong, the way in which the address of the next hop is encoded, and the semantics of the NLRI in the NLRI field 312.

The SAFI field 304 is an 8-bit field. The SAFI field 304 does not generally identify an address family. Rather, the SAFI field 304 may be used to indicate the type of data being included in the NLRI field 312. For example, SAFI values 1 and 2 may indicate unicast and multicast routing information is present in the NLRI field 312. Other SAFI values may indicate that other kinds of information may be present, such as Flow Specification information.

The length of next hop address field 306 is an 8-bit field. The value in the length of next hop address field 306 indicates the length of the next hop address field 308.

The next hop address field 308 is a variable variable-length field. Because the general role of routing is for a router to decide which node to forward a packet to next, the next hop address field 308 contains the network address of the next router on the path to the destination. For uses of this attribute not needing a next hop address, the length of next hop address field 306 may have the value zero. The network layer protocol associated with the network address of the next hop is identified by a combination of the <AFI, SAFI> carried in the attribute (i.e., the AFI field 302 and SAFI field 304).

The reserved field 310 is an is an 8-bit field. Currently, the reserved field 310 must be set to 0, and should be ignored by upon receipt.

The NLRI field 312 is a variable length field. The NLRI field 312 lists NLRI for the feasible routes or other information being advertised in this attribute. The semantics of the NLRI are identified by a combination of <AFI, SAFI> carried in the attribute. The NLRI field 312 can also permit a router to advertise the Network Layer address of the router that should be used as the next hop to the destinations listed in the NLRI field 312. This is a different use of "NLRI" from the top level BGP message (i.e., the NLRI field 118 in the BGP UPDATE message 100 shown in FIG. 1).

FIG. 3B is a schematic diagram of the structure of MP_UNREACH_NLRI attribute 300B in accordance with an embodiment of the present disclosure. The MP_UNREACH_NLRI attribute 300B can be used for withdrawing multiple unfeasible routes or other information from service. The MP_UNREACH_NLRI attribute 300B includes an AFI field 322, a SAFI field 324, and a Withdrawn Routes field 326. The AFI field 322 and the SAFI field 324 are the same as the AFI field 302 and the SAFI field 304 of the MP_REACH_NLRI attribute 300A in FIG. 3A. The Withdrawn Routes field 326 is a variable-length field that lists NLRI for the routes or other information being withdrawn from service. The semantics of NLRI are identified by a combination of <AFI, SAFI> carried in the attribute.

As stated above, community information may be included as a path attribute in BGP update messages. A BGP community was originally a group of destinations that share a common property. Community information may be used to include additional information in a BGP UPDATE message and thus may augment MP_REACH_NLRI, MP_UNREACH_NLRI, and/or other attributes present in the same BGP UPDATE message. For example, the Extended Communities attribute (FIG. 4) provides a mechanism for labeling information carried in BGPv4. These labels can be used to control the distribution of information or for other purposes. One of the most flexible community attribute is the BGP Community Container attribute (attribute type code 34), commonly referred to as the Wide Community attribute, because the BGP Community Container attribute is designed to hold a set of typed containers and variable length containers, which can in turn contain a variety of information encoded in TLV or a similar format where the value can include further TL Vs or other information.

FIG. 4 is a schematic diagram of an Extended Communities attribute 400 in accordance with an embodiment of the present disclosure. A BGP speaker may use the Extended Communities attribute 400 to control which routing information to accept or to distribute to its peers.

The Extended Communities attribute 400 includes a high type byte field 402, a low type byte field 404, and a value field 406. The high type byte field 402 is used to indicate an extended community type. The low type byte field 404 is used to indicate a sub-type of the extended community type indicated in high type byte field 402. For example, the high type byte field 402 may have a type value 0x01 indicating that the attribute is for a Non-Transitive IPv4-Address-Specific Extended Community, and the low type byte field 404 may have a value of 0x03 indicating that the sub-type is Route Origin. For some extended community types, there may be no sub-types. For these extended community types with no sub-types, the Extended Communities attribute 400 would not have the low type byte field 404. The value field 406 is a sequence of fixed length 8-byte elements.

The encoding of the value field 406 is dependent on the type of community specified by the high type byte field 402 and a low type byte field 404. Note that while the remaining 6 bytes are referred to as a value field, the entire 8-byte element is part of the sequence that is the value field 406. For some Extended Community types/sub-types, the value field 406 may include a 2-byte AS number or a 4-byte IPv4 Address.

It is common to refer to one of the elements in the sequence that makes up the value of a community, an extended community, or the like as if the element were the entire value of such an attribute. For example, saying something is encoded "as a community attribute" when what is precisely meant is that the element is encoded as one of the sequence of elements in the value field of the attribute.

FIG. 5 is a schematic diagram of an IPv6 Address Specific BGP Extended Community attribute 500 in accordance with an embodiment of the present disclosure. The IPv6 Address Specific BGP Extended Community attribute 500 is similar to the Extended Communities attribute 400, except that the IPv6 Address Specific BGP Extended Community attribute 500 carries an IPv6 address and thus could be used in a pure IPv6 environment as a replacement of an Extended Community that included an IPv4 address. The IPv6 Address Specific BGP Extended Community attribute 500 is a transitive, optional BGP attribute. The IPv6 Address Specific BGP Extended Community attribute 500 consists of a set of "IPv6 Address Specific extended communities." All routes or other information with the IPv6 Address Specific Extended Community 500 attribute may be labeled by the information listed in the attribute.

The IPv6 Address Specific BGP Extended Community attribute 500 includes a first high-order byte field 502, a sub-type field 504, an IPv6 Address field 506, and a remainder of value field 508. The first high-order byte field 502 indicates whether a particular sub-type of this community is transitive across ASes (0x00) or not (0x40). The sub-type field 504 indicates the particular sub-type of the IPv6 Address Specific Extended Community. The sub-types are the same as for the Extended Community (e.g., Route Target (sub-type value 0x02), Route Origin (sub-type value 0x03), OSPF Route ID (sub-type value 0x07)). The IPv6 Address field 506 is a 16 byte field that contains an IPv6 unicast address. The remainder of value field 508 can be used to encode any information defined by the sub-type of the community. Additional information about the IPv6 Address Specific BGP Extended Community attribute is described in IETF RFC 5701.

FIG. 6 is a schematic diagram of a BGP Community Container Attribute Common Header 600 in accordance with an embodiment of the present disclosure. As stated above, one of the most flexible community attributes is the BGP Community Container attribute (Attribute Type 34) because the BGP Community Container attribute can hold a set of typed containers. Any given container type may appear multiple times, unless that container type's definition specifies otherwise. A container within the BGP Community Container Attribute always starts with the BGP Community Container Attribute Common Header 600.

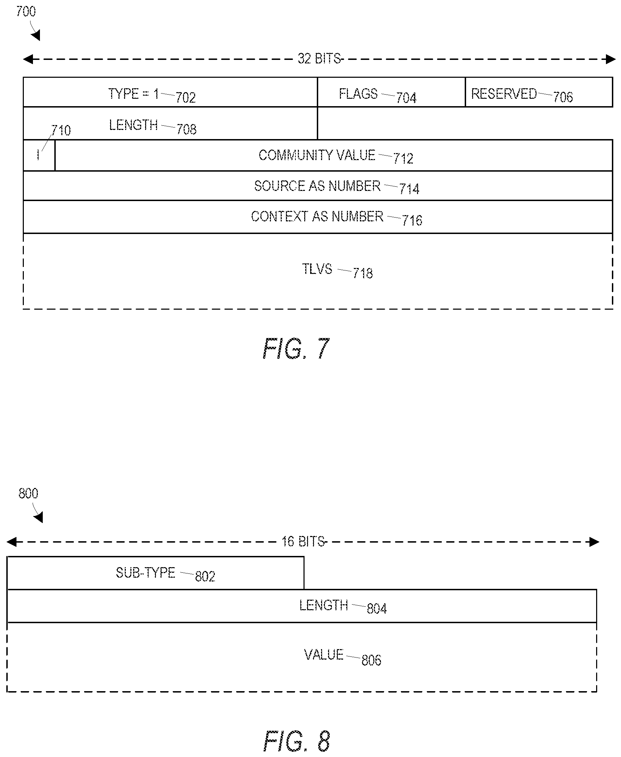

The BGP Community Container Attribute Common Header 600 includes a type field 602, a flags field 604, a reserved field 606, and a length field 608. The type field 602 indicates a BGP Community Container type. For example, type 1 is a indicates that the BGP Community Container is a BGP Wide Community Container (FIG. 7). The flags field 604 indicates whether the community in the container is transitive across ASes and/or whether the community in the container is transitive across confederation. The reserved field 606 is set to zero when originated and should be ignored upon receipt. The length field 608 indicates the total length in octets of a given container's contents.

FIG. 7 is a schematic diagram of a BGP Wide Community Container 700 in accordance with an embodiment of the present disclosure. The BGP Wide Community Container 700 includes a type field 702, a flags field 704, a reserved field 706, a length field 708, which constitute the Common Header part of the BGP Wide Community Container as shown in FIG. 6. These are followed by an I field 710, a community value field 712, a source AS number field 714, a context AS number field 716, and an optional TL Vs field 718 (BGP Wide Community TLV format shown in FIG. 8). For example, the type field 702 has a value of 1 to indicate that the BGP Community Container is a BGP Wide Community Container. The I field 710 indicates whether the value in the community value field 712 is Internet Assigned Numbers Authority (IANA) Registered and has a well-defined meaning with underlying semantics. The community value field 712 indicates what set of actions a router is requested to take upon reception of a route containing this community. The semantics of this value depend on whether this is a private/local community or IANA registered. The source AS number field 714 indicates the AS originating this BGP Wide Community. The context AS number field 716 identifies the AS that provides the semantics to interpret this community.

FIG. 8 is a schematic diagram of a BGP Wide Community TLV 800 in accordance with an embodiment of the present disclosure. The BGP Wide Community TLV 800 includes a Sub-Type field 802, a Length field 804, and a Value field 806. The Sub-Type field 802 indicates the sub-type of the BGP Wide Community TLV. For example, a value of 1 in the Sub-Type field 802 indicates that the BGP Wide Community TL V is a Wide Community Target(s) TL V, a value of 2 in the Sub-Type field 802 indicates that the BGP Wide Community TLV is a BGP Wide Community Exclude Target(s) TLV, and a value of 3 in the Sub-Type field 802 indicates that the BGP Wide Community TLV is a BGP Wide Community Parameter(s) TLV. The Length field 804 indicates the length of the Value field 806 field in octets. The Value field 806 is specific to the sub-type indicated in the Type field 802. For example, for Wide Community Target(s) TLV (Sub-Type 1), the Value field 806 specifies a series of Atom TLVs, which may be formatted similar to BGP Wide Community TL V 800.

Using BGP as described above, Flow Specifications may be communicated to BGP speakers. In particular, Flow Specifications for traffic flows can be distributed as a BGP NLRI. FlowSpec is the provision for and use of rules comprising a filter that might or might not match a packet and zero or more actions to be taken on a packet if the filter matches the packet. The filter, also referred to as a Flow Specification, is a set of tests that classify packets as being or not being part of a specific flow of packets. In particular, a BGP Flow Specification is one or more 2-tuple components that specify one or more match criteria that can be applied to IP traffic, traffic encapsulated in IP traffic or traffic associated with IP traffic. The following are examples of such traffic: an IP packet or an IP packet inside a Layer 2 (L2) packet (Ethernet), a Multiprotocol Label Switching (MPLS) packet, and a Service Function Chain (SFC) flow. An action is some modification to a packet or to the handling of a packet that can appear as part of a FlowSpec Rule. A FlowSpec Rule is the combination of a Flow Specification and a set of zero or more Actions. For example, BGP FlowSpec allows rapid deployment and propagation of filtering and policing functionality among a large number of BGP peer routers to mitigate the effects of a distributed denial-of-service (DDoS) attack on a network. BGP FlowSpec allows for a more granular approach and effectively enables construction of a criteria (e.g., source, destination, Layer 4 (L4) parameters (e.g., TCP flags, User Datagram Protocol (UDP)/TCP ports, and Internet Control Message Protocol (ICMP)), and packet specifics such as length, fragment and so on to match a particular flow.

The IETF specifies a BGP Flow Specification version 1 (FSv1) in RFC 8955, RFC 8956, and RFC 9117. RFC 8955 covers the general facility and covers BGP FSvl for IPv4. RFC 8956 extends BGP FSv1 for IPv6. RFC 9117 revises the validation procedure for BGP FSv1. Further extensions to BGP FSv1 that have been approved by the IETF IDR WG, but not yet approved by the overall IETF as of the date of this document, and so may be changed, include extensions that are in the following Internet Drafts: draft-ietf-idr-flowspec-l2vpn and draft-ietf-idr-flowspec-nvo3, which extend BGP FSv1 for Layer 2 traffic and for tunneled traffic, as well as those in draft-ietf-idr-flowspec-srv6, which extends BGP FSv1 for IPv6 Source Routing (SRv6). Other extensions may have been proposed.

As stated above, Flow Specifications for traffic flows can be distributed as a BGP NLRI. For instance, BGP FSv1 Flow Specifications may be transmitted in MP_REACH_NLRI attributes (FIG. 3A) and may be withdrawn with MP_UNREACH_NLRI attributes (FIG. 3B). The NLRI field of the MP_REACH_NLRI attribute and MP_UNREACH_NLRI attribute comprise a sequence of one or more Flow Specifications encoded as one or more 2-tuple components of the form <length, NLRI value>. The length is a one-byte or two-byte length field. For instance, in an embodiment, when the length of the NLRI is less than 240 bytes, the length appears as the value of a one-byte length field. When the length of the NLRI is 240 bytes or more, the length is encoded as two bytes with the first four bits all set to 1 of the first byte and the length encoded in the remaining 4 bits of the first byte and the entirety of the 2nd byte. The NLRI value is a variable-length field that specifies a component. Each component begins with a one-byte component type. IANA has created and maintains a registry entitled "Flow Spec Component Types." A specific packet is considered to match the Flow Specification when the packet matches the intersection (AND) of all the components present in the Flow Specification. In other words, the match/no-match result of a component in the Flow Specification should be logically ANDed with the match/no-match result of the previous component in the Flow Specification. Only when all components present in the Flow Specification have been checked and the intersection (i.e., the logical AND result) of all the components present in the Flow Specification is true, then the packet is considered to match the Flow Specification.

The exact structure of the Flow Specification depends on the AFI/SAFI at the beginning of the attribute. Components must follow strict type ordering by increasing numerical order. A given component type may be present in the Flow Specification a maximum of one time. If present, the component must precede any component of higher numeric type value. All combinations of components within a single Flow Specification are allowed. However, some combinations cannot match any packets (e.g., "ICMP Type AND Port" will never match any packets) and thus should not be propagated. Some BGP Flow Specifications may not contain Next Hop information or the Network Address in the Next-Hop field (e.g., next hop address field 308 in FIG. 3A) is ignored. For these BGP Flow Specifications, the Next Hop Length field (e.g., the length of next hop address field 306 in FIG. 3A) of these attributes is set to zero.

When a BGP speaker, which supports FlowSpec and has FlowSpec enabled, receives a packet, the BGP speaker determines whether the packet matches a Flow Specification being used and, when the packet matches all conditions specified by the Flow Specification criteria, the BGP speaker may perform the action or actions indicated in that traffic filter rule or, when no specific action is specified, the BGP Speaker may discard the packet (e.g., BGP FSv1 may be "default deny"). Thus, FlowSpec rules may be used to discard undesired traffic, as a form of Access Control List, to redirect traffic, to mark traffic, and may be used in other ways. It should be noted that more than one Flow Specification may match a particular traffic flow. Thus, it is necessary to define the order in which Flow Specifications get matched and the actions being applied to a particular traffic flow. In an embodiment, the relative order of two Flow Specifications is determined by comparing their respective components. For instance, when there is a sequence of components, the components may appear in strictly increasing order by type. The algorithm starts by comparing the left-most components (lowest component type value) of the Flow Specifications. If the types differ, the Flow Specification with lowest numeric type value has higher precedence (and thus will match before) than the Flow Specification that doesn't contain that component type. If the component types are the same, then a type- specific comparison is performed (see below). If the types are equal, the algorithm continues with the next component. Ordering of different Flow Specification may also take into account whether they contain an address Prefix Component and, for example, give priority to Flow Specifications containing such Prefixes or giving priority to the Flow Specification with the longest prefix if more than one contains such a Prefix.

As stated above, FlowSpec specifies traffic filter rules comprising a Flow Specification (which may be transmitted as a BGP NLRI) and the corresponding actions. BGP FSv1 actions may be encoded in an EXTENDED COMMUNITY Attribute (FIG. 4). For example, action(s) may specify whether the BGP speaker should continue to look for additional Flow Specification matches, and possibly perform additional actions when additional matches are found or stop FlowSpec processing on a packet with those action(s). The AFI/SAFI pairs relevant to BGP FSv1 that have been assigned thus far include the following.

| AFI | SAFI | Description | RFC / Internet Draft |
|---|---|---|---|
| 1 | 133 | IPv4 Flow Specification V1 | RFC 8955 |
| 1 | 134 | Virtual Private Network (VPN) IPv4 Flow Specification V1 | RFC 8965 |
| 2 | 133 | IPv6 Flow Specification V1 | RFC 8956 |
| 2 | 134 | VPN IPv6 Flow Specification V1 | RFC 8956 |
| 6 | 133 | L2 Flow Specification V1 | draft-ietf-idr-flowspec-l2vpn |
| 25 | 134 | VPN L2 Flow Specification V1 | draft-ietf-idr-flowspec-l2vpn |
| 1 | 77 | IPv4 Tunnel Flow Specification V1 | draft-ietf-idr-flowspec-nvo3 |
| 2 | 77 | IPv6 Tunnel Flow Specification V1 | draft-ietf-idr-flowspec-nvo3 |
| 6 | 77 | L2 Tunnel Flow Specification V1 | draft-ietf-idr-flowspec-nvo3 |

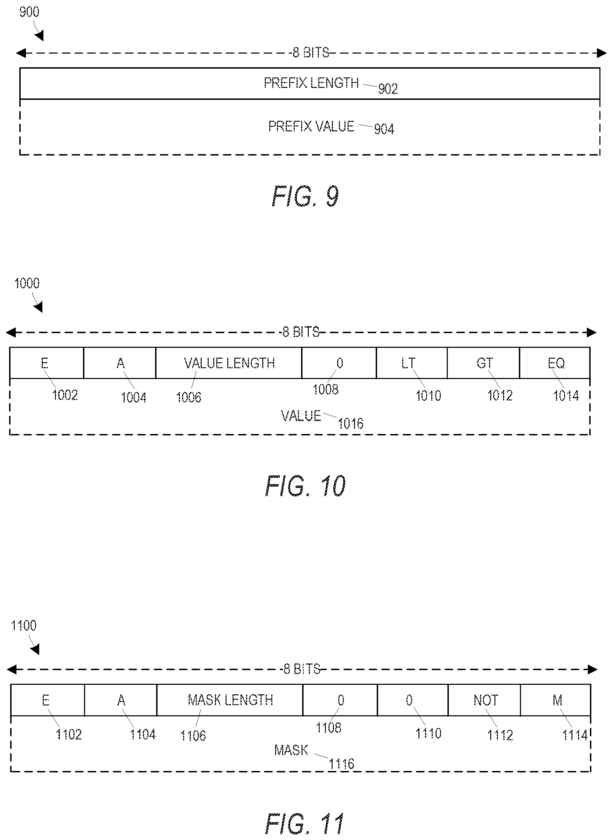

In an embodiment, to exchange Flow Specification, BGP's Capability Advertisement facility is used to exchange the Multiprotocol Extension Capability Code (Code 1), as defined in RFC4760. As shown in the above table, the (AFI, SAFI) pair carried in the Multiprotocol Extension Capability is (AFI=1, SAFI=133) for IPv4 Flow Specification and (AFI=1, SAFI=134) for VPNv4 Flow Specification. An IETF BGP FSv1 under SAFI 133 may comprise a sequence of flow components specifying the conditions required to satisfy the Flow Specification. Example components of a BGP FSv1 may include a Prefix Component (FIG. 9), an Arithmetic Component (FIG. 10), and a Boolean Component (FIG. 11). In an embodiment, BGP FSv1 under SAFI 134 may start with an 8-byte Route Distinguisher, indicating a route for forwarding traffic that matches the Flow Specification. For example, AFI/SAFI = 1/134 may have an NLRI comprising a Route Distinguisher followed by a sequence of Components.

FIG. 9 is a schematic diagram illustrating a Prefix Component 900 in accordance with an embodiment of the present disclosure. The Prefix Component 900 may be used to encode an IP address prefix. The Prefix Component 900 includes a prefix length field 902 and prefix value field 904. The Prefix Component 900 may be encoded similarly to prefix encoding in RFC 4271. For example, the prefix length field 902 may be a 1 byte field that indicates the length in bits of the IP address prefix in the variable-length prefix value field 904. In an embodiment, the IP address prefix value in the prefix value field 904 is padded up to the next byte boundary and compared for equality to the same length prefix of a field in the packet. The match result of any Prefix Component 900 may be logically ANDed with match result of other components of the Flow Specification.

FIG. 10 is a schematic diagram illustrating an Arithmetic Component 1000 in accordance with an embodiment of the present disclosure. The Arithmetic Component 1000, also referred to as a Numeric Operator Component, includes an end of list (E) bit field 1002, an AND (A) bit field 1004, a value length field 1006, a zero bit field 1108, a less than (LT) bit field 1010, a greater than (GT) bit field 1012, an equal (EQ) bit field 1014, and a value field 1016. The E bit field 1002 is used indicate the end of a sequence of components. For instance, the last {operator (op), value} pair in the list of sequence has the E bit field 1002 set to 1. When A bit field 1004 is set (e.g., is 1), the operation is a logical AND (i.e., the match/no-match result of the component should be logically ANDed with the result of the previous {op, value} component), and when not set, the match/no-match result of the component is logically ORed with the result of the previous {op, value} pair. The AND operator has higher priority than the OR operator for the purposes of evaluating logical expressions. The value length field 1006 indicates the length of the value field 1016 for this operator. This value length field 1006 has four possible values which indicate value lengths of 1 (length=00), 2 (length=01), 4 (length=10), and 8 (length=11) bytes. The zero bit field 1108 is set to 0 on NLRI encoding and is ignored during decoding. The LT bit field 1010 when set indicates a less-than comparison between data and value. The GT bit field 1012 when set indicates greater- than comparison between data and value. The EQ bit field 1014 when set indicates an equality comparison between data and value. The LT bit field 1010, GT bit field 1012, and EQ bit field 1014 can be combined to produce common relational operators, such as "less or equal," "greater or equal," and "not equal to." The value field 1016 contains a value for use in comparison with the field in the packet indicated by the Component type. For example, the value in the value field 1016 may be compared with the field in the packet indicated by the Component type using less than, greater than, and equality when the LT bit field 1010, the GT bit field 1012, or EQ bit field 1014, respectively, has a value of 1 and the results of this set of zero to three comparisons are logically ORed together to determine whether the arithmetic components match. Thus, when the LT bit field 1010, the GT bit field 1012, and the EQ bit field 1014 all have a value of 1, the Arithmetic Components will always match because at least one of the conditions (less than, greater than, or equal to) must be true and when logically ORed together with the result of the other comparisons will result in a value of 1 indicating a match, and when the LT bit field 1010, the GT bit field 1012, and the EQ bit field 1014 all have a value of 0, the Arithmetic Components will never match because no comparison is performed and the logical OR of {0, 0, 0} will result in a value of 0 indicating no match.

FIG. 11 is a schematic diagram illustrating a Boolean Component 1100 in accordance with an embodiment of the present disclosure. The Boolean Component 1100, also referred to as a Bitmask Operator Component, includes an end of list (E) bit field 1102, an AND (A) bit field 1104, a mask length field 1106, a zero bit field 1108, a zero bit field 1110, NOT bit field 1112, a Match (M) bit field 1114, and a mask field 1116. The E bit field 1102 and the A bit field 1104 have the same purpose as the E bit field 1002 and the A bit field 1004 in FIG. 10. The mask length field 1106 indicates the length of the mask field 1116 for this operator similar to the value length field 1006 in FIG. 10. The zero bit field 1108 and the zero bit field 1110 are both set to 0 on NLRI encoding and ignored during decoding. The NOT bit field 1112 when set indicates the logical negation of operation. The M bit field 1114 when set indicates is a bitwise match operation defined as "(data AND value) == value"; and when not set, (data AND value) evaluates to TRUE if any of the bits in the mask value are set in the field in the packet indicated by the Component type. The mask field 1016 contains a mask value (or mask) for use in comparison with the field in the packet indicated by the Component type.

For the Boolean Component 1100, the mask in the mask field 1016 is bitwise ANDed with the field in the packet indicated by the Component type. When the M bit field 1114 has a value of 1, the initial test is for all bits selected by the mask being 1. When the M bit field 1114 has a value of 0, the test is for any one or more bits selected by the mask being 1. The result of this test is then negated when the NOT bit field 1112 in the operation byte has a value of 1 to produce the match/no-match result for the Boolean Component 1100.

As described above, Flow Specifications in BGP FSv1 may be transmitted in MP_REACH_NLRI attributes as a path attribute in a BGP UPDATE message and may be withdrawn using MP_UNREACH_NLRI attributes as a path attribute in a BGP UPDATE message. Additionally, BGP FSv1 actions may be encoded in an EXTENDED COMMUNITY attribute and transmitted in a BGP UPDATE message as a path attribute. However, various errors may occur when a BGP speaker receives a BGP UPDATE message. For example, a Flow Specification having an NLRI that contains an unknown component type is considered malformed and results in an error. Additionally, an error occurs when a prefix in the NLRI field is semantically incorrect (e.g., an unexpected multicast IP address).

IETF RFC 7606 describes four responses to errors resulting from BGP UPDATE messages and provides guidance for using those responses. The first two responses may be considered severe responses. The first response is to reset the BGP session over which the offending attribute was received so that a new connection needs to be established between the BGP speakers and new OPEN messages exchanged. This behavior is undesirable because a session reset would impact not only routes with the offending attribute, but also other valid routes exchanged over the session. The second response is to disable a Flow Specification of a particular type (i.e., ignore all the subsequent routes with that AFI/SAFI received over that session). The third response is to treat the BGP UPDATE message as a withdrawal. This means, for information being received for a Flow Specification, not accepting that information and removing any matching information already being retained. In other words, the BGP UPDATE message containing the path attribute in question is treated as though all contained routes had been withdrawn just as if they had been listed in the WITHDRAWN ROUTES field (or in the MP_UNREACH_NLRI attribute if appropriate) of the BGP UPDATE message. The fourth response is Attribute discard, where the malformed attribute is discarded and the BGP UPDATE message continues to be processed. This approach can only be used when discarding an attribute that has no effect on route selection or installation. Additionally, the third response and the fourth response can only be used when the BGP UPDATE message can be parsed.

Additionally, there are several problems with BGP FSv1 including the following non-limiting examples that are presented in no particular order of significance. First, BGP FSv1 is hard to extend. Second, there is no general requirement that filter conditions such as Components be encoded so that the lengths of the filter conditions are apparent. While many currently defined Components have length fields, the Components are not consistently encoded and are not in a consistent place within with Component. Thus, when a new Component is specified and included in a Flow Specification, a BGP speaker that receives that Flow Specification, but has not been updated for the new Component, cannot even skip over the new Component and process any subsequent Components or fields because the BGP speaker cannot determine the length of the new Component. Third, there is no general way to recognize whether an EXTENDED COMMNITY sequence element is an Action. Thus, newly specified Actions may not be recognized by a BGP speaker. This also applies to Actions encoded into other types of Community Attributes or into other types of Attributes. Fourth, a BGP speaker has no way to advertise what FlowSpec capabilities the BGP speaker supports at the Component or Action level. Fifth, the order in which FlowSpec Rules are tried is fixed by an algorithm. There is no mechanism for the source of a FlowSpec Rule to control the order in which FlowSpec Rules are tried. Sixth, the current encoding of the value in a Component, which is then used in an arithmetic comparison as described in FIG. 10, or used as a Boolean test as described in FIG. 11, with part of the packet being matched, can only encode lengths of 1, 2, 4, or 8 bytes. Therefore, a Component cannot include a 128-bit IPv6 address because the address requires 16 bytes to encode. In addition, when the value field is a 48-bit MAC address (6 bytes), the Component must be placed within an 8-byte field, thereby wasting 2 bytes. Seventh, there is no way to specify how to handle the Component as an error or ignore the Component under the following conditions: (a) when a Flow Specification test Component is of an unknown type, (b) when a Flow Specification test Component is of a known type, but the field the Component references is not present or not completely present, (c) when a FlowSpec Action is of an unknown type, and (d) when a FlowSpec Action is of a known type but references a field that is not present or not completely present. Eighth, there no way to name Flow Specifications or Components or Actions or sets of Actions or the combination of a Flow Specification and a set of Actions or the like. BGP FSv1 does suggest that a new EXTENDED COMMUNITY or other community element could be used as an abbreviation for a set of actions, but there may be no standard way to do so. Ninth, because fixed size community elements are used for FlowSpec Actions, in many cases there are multiple wasted bytes. For example, the BGP FSv1 Action named "Traffic-Action" may use only two bits out of the 6 bytes of data available in an EXTENDED COMMUNITY.

There have been proposals to extend BGP FSv1 to address some of the above referenced problems associated with BGP FSv1. For example, one proposal, draft-haas-flowspec-capability-bits, is to add BGP Flowspec capability bits to enable a BGP speaker to advertise the component types that the BGP speaker is capable of processing. A BGP Speaker that receives the BGP Flowspec Capability Bits must not originate or propagate a BGP Flowspec encoded NLRI that contains a component type not present in the received BGP Flowspec capability bit-string. If a BGP Speaker implementing has transmitted the BGP Flowspec Capability Bits to its peer and receives a BGP Flowspec NLRI with an unacceptable component (i.e., not in its BGP Flowspec Capability bit-string), the BGP Speaker may terminate the BGP session by sending a NOTIFICATION message. In another proposal, draft-haas-idr-flowspec-term-order, a term order value could be used to indicate explicit rule ordering (i.e., provide a logical order of that NLRI vs. other NLRI with that component.) Additionally, there is a FlowSpec V2 draft, draft-ietf-idr-flowspec-v2, which has been adopted by the IDR WG, that may have included, in some version(s) of the draft, facilities for naming Flow Specification components, naming Flow Specifications, naming sets of Actions, naming FlowSpec rules comprising a Flow Specification and resulting Actions, explicitly ordering FlowSpec rules, specifying an order for actions, providing that the default action for a FlowSpec rule not specifying any other action is to block matching packets or is to admit matching packets, and other features.

Disclosed herein are techniques that solve one or more of the above referenced problems associated with BGP FSv1. For example, in an embodiment, a method of encoding is disclosed for proper handling of new match conditions and actions that are unknown, either (1) due to the test to be made or the action to be taken being unknown, (2) due to the test or action referencing a packet field that is unknown, (3) due to a known match condition or known action that references a packet field that is known but absent, or (4) due to a match or action that cannot be accomplished for some other reason.

In another embodiment, a method of encoding is disclosed for specifying the type and length of new packet matching Components and actions so that the length may be known even to a BGP speaker the implements FlowSpec, but does not know the type. For instance, for filter conditions or actions to be easily extensible so that new filter conditions and new actions may be added without requiring all BGP speakers to upgrade (i.e., updated to know the new filter conditions and new actions), the encoding of filter conditions or actions generally needs to include the length of the filter conditions or actions in such a way that the filter conditions or actions can be easily skipped over when the type of condition or action is not known or tries to operate on a field that is not present. In an embodiment, using a TL V encoding, or some other fixed-length field encoding (e.g., LengthTypeValue (LTV) encoding), the Type and the Length can be encoded in a uniform manner (e.g., both Type and Length are encoded in fixed-length fields), so that the value of the Length field can be accessed/determined even when the Type is unknown to a BGP speaker to enable the a BGP speaker to properly decode unknown components.

Additionally, the disclosed embodiments provide greater range and precision in value length which is beneficial for both Arithmetic and Boolean Components. Further, the disclosed embodiments enable error responses to be at the granularity of individual Components or actions, not just at the higher granularity of Attributes, BGP messages, AFI/SAFIs, or BGP sessions.

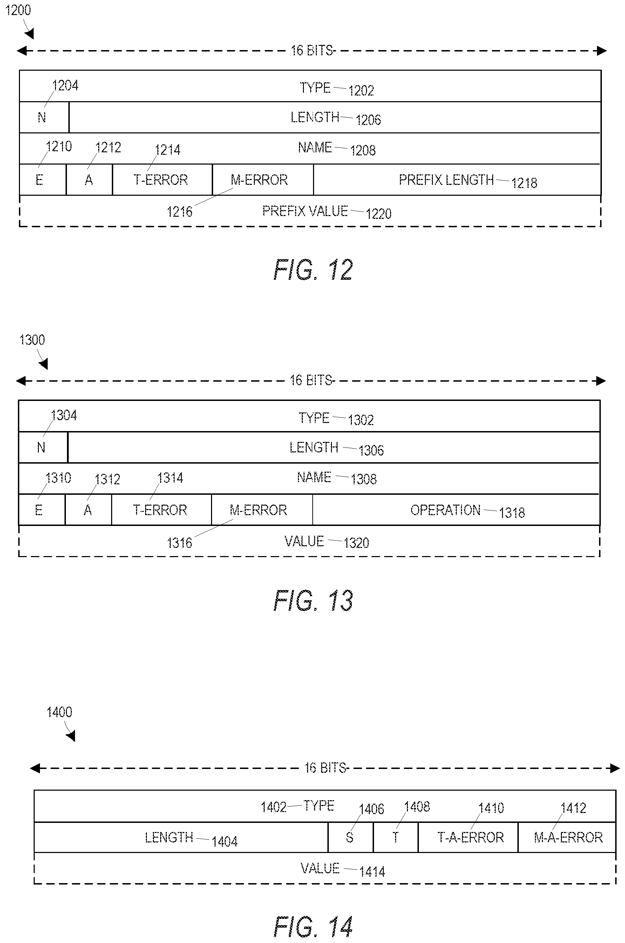

In accordance with an embodiment, Components may beneficially be encoded as similarly shown in FIG. 12 and FIG. 13. For example, FIG. 12 is a schematic diagram of an encoding of a Prefix Component 1200 (or Prefix matching Component) in accordance with an embodiment of the present disclosure. The encoding of the Prefix Component 1200 may be approved by the IETF in a future version of BGP Flow Specification (referred to herein as BGP FSvX, where vX may be version 2, version 3, or some other future approved/recognized version of BGP Flow Specification). The Prefix Component 1200 includes a type field 1202, an N bit field 1204, a length field 1206, a Name field 1208, an end of list (E) bit field 1210, an AND (A) bit field 1212, a Type-Error (T-Error) field 1214, a Missing-Error field (M-Error) 1216, a Prefix Length field 1218, and a Prefix Value field 1220.

The type field 1202 is a 2-byte field that indicates the Component type (i.e., a value assigned to a Prefix Component type). The N bit field 1204 indicates whether a name is present in the Component. For example, when the N bit field is set to 1, the N bit indicates that a name is present in the Name field 1208 of the Prefix Component 1200. In the depicted embodiment, the length field 1206 is a 15-bit field that indicates the length of the Prefix Component 1200.

In an embodiment, the Name field 1208 is an optional variable-length field. The name, when present, could be encoded as a Unicode Transformation Format 8-bit (UTF-8) string preceded by a one-byte length of that string in bytes (see IETF RFC 3629), encoded in an American Standard Code for Information Interchange (ASCII) string terminated by a zero byte (see IETF RFC 20), or encoded in other ways. As an alternative, the name could be a fixed length identifier such as a 4-byte or other length quantity. As another alternative, the name could always be present, eliminating the need for the N bit field 1204.

Similar to the Arithmetic Component 1000 in FIG. 10 and the Boolean Component 1100 in FIG. 11, the E bit field 1210 is used indicate the end of a sequence of components and the A bit field 1212 when set (e.g., is 1), indicates that the operation is a logical AND, and when not set, the operation is a logical is a logical OR.

In an embodiment, the T-Error field 1214 may contain a value indicating what to do when the value in the Type field is unknown (i.e., how to handle an unknown Component type). The M-Error field 1216 may contain a value indicating what to do when the value in the Type field is known, but a packet field that the Type field references is not present (i.e., how to handle a referenced packet field that is missing). In an embodiment, the T-Error field 1214 / M-Error field 1216 may have values associated with the corresponding error handling actions or instructions as shown in the following table.

| | |
|---|---|
| 1 | AFI/SAFI disable |
| 2 | Treat as withdrawal |
| 3 | Ignore Attribute |
| 4 | Ignore Flow Specification |
| 5 | Skip to next Component and treat as if the erroneous Component matched. |
| 6 | Treat the erroneous Component as if it did not match. May proceed to the next Component if the erroneous Component is involved in an OR. |

The Prefix Length field 1218 indicates the length of the Prefix Value field 1220. The Prefix Value field 1220 is a variable-length field that specifies an IP address prefix.

FIG. 13 is a schematic diagram of an encoding of a Component 1300 in accordance with an embodiment of the present disclosure. In an embodiment, the Component 1300 may be used to encode an Arithmetic or Boolean Component for IETF BGP FSvX. The Component 1300 includes a type field 1302, an N bit field 1304, a length field 1306, a Name field 1308, an E bit field 1310, an A bit field 1312, a T-Error field 1314, a M-Error field 1316, an Operation field 1318, and a Value field 1320.

The type field 1302 is a 2-byte field that indicates the Component type (i.e., a value assigned to an Arithmetic or Boolean Component type). The N bit field 1304 indicates whether a name is present in the Name field 1308 of the Component 1300. For example, when the N bit field 1304 is set to 1, the N bit indicates that a name is present in the Name field 1308 of the Component 1300. In the depicted embodiment, the length field 1306 is a 15-bit field that indicates the total length of the Component 1300. In an embodiment, the N bit field 1304 and the Name field 1308 are omitted and the length field 1306 is 16 bits.

In an embodiment, the Name field 1308 is an optional variable-length field. The name, when present, could be encoded as a UTF-8 string preceded by a one-byte length of that string in bytes, encoded in an ASCII string terminated by a zero byte, or encoded in other ways. As an alternative, the name could be a fixed length identifier such as a 4-byte or other length quantity. As another alternative, the name could always be present, eliminating the need for the N bit field 1304. In an embodiment, the N bit field 1304 and the Name field 1308 are omitted and the length field 1306 is 16 bits.

Similar to the Arithmetic Component 1000 in FIG. 10 and the Boolean Component 1100 in FIG. 11, the E bit field 1310 is used indicate the end of a sequence of components and the A bit field 1312 when set (e.g., is 1), indicates that the operation is a logical AND (i.e., the match/no-match result of the component should be logically ANDed with the result of the previous component), and when not set, the match/no-match result of the component is logically ORed with the result of the previous component.

Similar to the Prefix Component 1200 in FIG. 12, the T-Error field 1314 may contain a value indicating what to do when the value in the Type field in unknown. The M-Error field 1316 may contain a value indicating what to do when the value in the Type field is known, but a packet field that the Type field references is not present. In an embodiment, the table referred to in FIG. 12, shows values that may be used in the T-Error field 1314 and M-Error field 1316 and the action they may indicate on a Type Error or Missing Error, respectively.

The Operation field 1318 is a one byte field and may contain different kinds of information depending on the kind of Component. For example, in an embodiment, when the Component 1300 is used to encode an Arithmetic Component, the Operation field 1318 may be used to encode, in the low order three bits of the Operation field 1318, an LT bit field, a GT bit field, and an EQ bit field as described in the Arithmetic Component 1000 in FIG. 10. The remaining five bits in the Operation field 1318 may be unused. Similarly, when the Component 1300 is used to encode a Boolean Component, the Operation field 1318 may be used to encode, in the low order two bits of the Operation field 1318, a NOT bit field and an M bit field as described in the Boolean Component 1100 in FIG. 11. The remaining six bits in the Operation field 1318 may be unused. The Value field 1320 is a variable-length field that specifies a variable length Value for the Component 1300.

New Components may be added using new Type values for the Component 1300 and even new Components of a new structure may be added in an extensible way as long as the Type, Length, possible name, "E" and "A" bits, and T-Error field can be located by a BGP speaker ignorant of the new structure.

Many alternative embodiments for Flow Specification Arithmetic or Boolean Components are possible. For example, the ability to name Components could be omitted. Different values of T-Error / M-Error could be provided, for example, to indicate whether the event should be logged, or fewer options could be provided. When the "Missing Error" is treated uniformly, the M-Error field may be removed and replaced by the Operation field as only 2 or 3 bits of the Operation field are needed above, which may save a byte. Alternatively, the handling of Component problems such as unknown type, missing field, or the like, could be encoded elsewhere in the Flow Specification rather than locally to the Component. Many other alternatives are possible such as re-arranging fields or changing their size or encoding or location.

FIG. 14 is a schematic diagram of an encoding of a FlowSpec Action 1400 in accordance with an embodiment of the present disclosure. The encoding of the FlowSpec Action 1400 may be approved by the IETF in BGP FSvX. In an embodiment, the FlowSpec Action 1400 may be carried/encoded in a sufficiently sized Community Attribute/Container.

The FlowSpec Action 1400 includes a Type field 1402, a Length field 1404, a Sample (S) bit field 1406, a Terminal (T) bit field 1408, a Type Action Error (T-A-Error) field 1410, a Missing Action Error (M-A-Error) field 1412, and a Value field 1414. The Type field 1402 is a two-byte field that indicates an Action type (e.g., traffic-rate (type 0x8006), traffic-action (type 0x8007), traffic redirect (type 0x8008), and traffic-marking (type 0x8009)). The Length field 1404 is a one-byte indicating the length of the overall length of the FlowSpec Action 1400.

The S bit field 1406 is a Sampling bit. When the S bit field 1406 is set (e.g., has a value of 1) for any of the Actions in a FlowSpec Rule, sampling and logging are enabled for packets matching the Flow Specification. The T bit field 1408 is a Terminal bit. When the T bit field 1408 is set (e.g., has a value of 1) in any of the Actions in a FlowSpec Rule, FlowSpec may continue after this FlowSpec Rule to test further Flow Specifications for matches (i.e., the traffic filtering engine will apply any subsequent filtering rules (as defined by the ordering procedure). When the T bit field 1408 is not set (e.g., has a value of 0), FlowSpec operation on the packet being processed may cease after that FlowSpec Rule (i.e., the evaluation of the traffic filter stops when this rule is applied).

The T-A-Error field 1410 indicates how to handle the Action when the Type specified in the Type field 1402 is unknown. The M-A-Error field 1412 indicates how to handle the Action when a field to be affected by the Action is not present in the packet. In an embodiment, the following table indicates the action that may be taken for some values of T-A-Error and M-A-Error.

| | |
|---|---|
| 1 | AFI/SAFI disable |
| 2 | Treat as withdrawal |
| 3 | Ignore Community/Container where this Action is found. |
| 4 | Ignore subsequent Actions in this set of Actions. |
| 5 | Skip to next Action and ignore the error. |

In various embodiments, the specific first column values in the table for T-Error and M-Error as referred to in FIG. 12 and FIG. 13, and the above table for T-A-Error, and M-A-Error may be changed or re-ordered as long as different actions are indicated by different values and the value fits into the size allotted for the relevant error field.

Many alternative embodiments for FlowSpec Actions are possible. The ability to name Actions may be added in a similar or different fashion to the naming of Components. More or fewer values of T-A-Error / M-A-Error could be provided. The S bit field 1406 and or T bit field 1408 could be moved to a separate Action rather than allow them to be encoded in each Action. However, the Type field 1402 and overall Length field 1404 should include enough information to indicate how to treat an unknown Type and be encoded so they can always be parsed so unknown extensions can be handled.

Other alternative embodiments for FlowSpec include providing T-Error, M-Error, T-A-Error, and/or M-A-Error information at a different level of granularity such as specifying T-Error and/or M-Error for a group of Components or for an entire Flow Specification, or specifying T-A-Error and M-A-Error for a group of Actions or the entire set of Actions associated with a FlowSpec Rule or providing such error handling information at the FlowSpec Rule level.

Flow Specifications and FlowSpec Rules may beneficially provide for naming, in a manner similar to or different from that discussed above for Components and Actions. Flow Specifications may also benefit from an indication of the order in which Flow Specifications are tried for matching.

In various embodiments, Flow Specification may be sent in MP_REACH_NLRI and MP_UNREACH_NLRI Attributes or in other Attributes including newly defined Attributes. Additionally, in various embodiments, FlowSpec Actions may be sent in BGP Wide Community Attributes or other Community Attributes or other non-Community Attributes including newly defined Attributes.

In an embodiment, BGP FSv1 can be extended with additional Flow Specification components and component types that include T-Error and/or M-Error or similar information and can test additional packet fields using the prefix, arithmetic, or Boolean component types described in FIGS. 12-14 or use new types of tests. The BGP FSv1 can also be extended by additional Actions that include T-A-Error and/or M-A-Error or similar information as an embodiment.

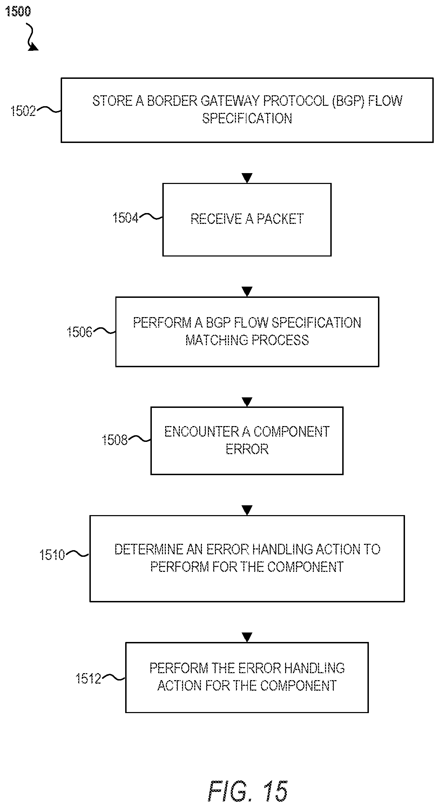

FIG. 15 is a flowchart illustrating a method 1500 of processing packets in accordance with an embodiment of the present disclosure. The method 1500 can be performed by a network node such as router or switch, and in particular by a BGP Speaker as described herein.

The method 1500 includes the network node storing, at step 1502, at least one BGP flow specification. As described above, a BGP Flow Specification comprises one or more 2-tuple components that specify one or more matching criteria. A BGP Flow Specification can be applied to IP traffic to identify packets that match a BGP Flow Specification and to perform an action on the packet indicated by the BGP Flow Specification when the packet matches the BGP Flow Specification. For instance, at step 1504, the network node receives a packet from a second network node in a network.

The network node, at step 1506, performs a BGP flow specification matching process to determine whether a BGP flow specification in the at least one BGP flow specification matches the packet. As stated above, a BGP flow specification is considered to match the packet when data associated with the packet matches an intersection (AND) of all components in the BGP flow specification.

The network node, at step 1508, encounters a component error with a component in the BGP flow specification during the BGP flow specification matching process. As described above, the component error may be a component that has a component type not known to the network node, or maybe a component that has a component type known to the network node, but indicates a test against a field absent from the data associated with the packet.

The network node, at step 1510, determines, based on error handling information stored in or with the at least one BGP flow specification, an error handling action to perform for the component. As described above, the error handling information may be indicated in one or more fields of the component (e.g., a Type-Error field of the component indicating the error handling action when the component error is a component that has a component type not known to the network node, and a Missing-Error field of the component that indicates the error handling action when the component error is a component that has a component type known to the network node, but indicates a test against a field absent from the data associated with the packet). Additionally, in accordance with the disclosed embodiments, the component should include length information for enabling the network node to determine a length of the component so that error handling can be performed for the component.

The network node, at step 1512, performs the error handling action for the component. As described above, various error handling actions may be performed for the component including, but not limited to, treating the component as having failed to match the packet, treating the component as having succeeded in matching the packet, skipping that the component and continuing with any subsequent component matching in the BGP flow specification, and for components specifying an action, skipping to a next action and ignore the component error.

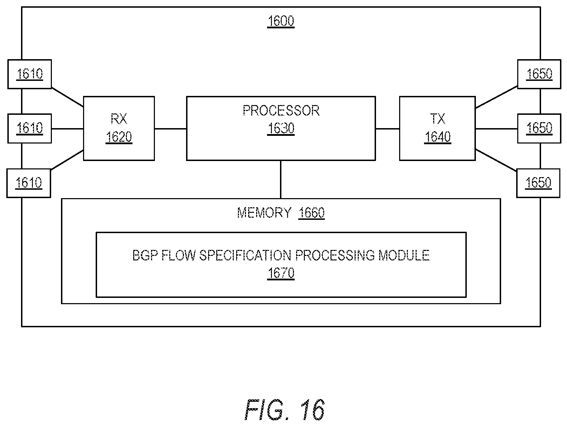

FIG. 16 is a schematic architecture diagram of an apparatus 1600 according to an embodiment of the disclosure. The apparatus 1600 is suitable for implementing the disclosed embodiments as described herein. For example, in an embodiment, a BGP Speaker can be implemented using the apparatus 1600. In various embodiments, the apparatus 1600 can be deployed as a router, a switch, and/or other types of network nodes within a network.

The apparatus 1600 comprises receiver units (Rx) 1620 or receiving means for receiving data via ingress/input ports 1610; a processor 1630, logic unit, central processing unit (CPU) or other processing means to process instructions; transmitter units (TX) 1640 or transmitting means for transmitting via data egress/output ports 1650; and a memory 1660 or data storing means for storing the instructions and various data.

The processor 1630 may be implemented as one or more CPU chips, cores (e.g., as a multi-core processor), field-programmable gate arrays (FPGAs), application specific integrated circuits (ASICs), and digital signal processors (DSPs). The processor 1630 is communicatively coupled via a system bus with the ingress ports 1610, RX 1620, TX 1640, egress ports 1650, and memory 1660. The processor 1630 can be configured to execute instructions stored in memory 1660. Thus, the processor 1630 provides a means for determining, creating, indicating, performing, providing, or any other action corresponding to the claims when the appropriate instruction is executed by the processor 1630.

The memory 1660 can be any type of memory or component capable of storing data and/or instructions. For example, the memory 1660 may be volatile and/or non-volatile memory such as read-only memory (ROM), random access memory (RAM), ternary content-addressable memory (TCAM), and/or static random-access memory (SRAM). The memory 1660 can also include one or more disks, tape drives, and solid-state drives and may be used as an over-flow data storage device, to store programs when such programs are selected for execution, and to store instructions and data that are read during program execution. In some embodiments, the memory 1660 can be memory that is integrated with the processor 1630.

In one embodiment, the memory 1660 stores a BGP Flow Specification processing module 1670. The BGP Flow Specification processing module 1670 includes data and executable instructions for implementing the disclosed embodiments. For instance, the BGP Flow Specification processing module 1670 can include instructions for implementing the method 1500 in FIG. 15 and any of the BGP Flow Specification encoding and conditional handling as described herein. The inclusion of the BGP Flow Specification processing module 1670 substantially improves the functionality of the apparatus 1600 by improving error handling for BGP Flow Specification as well as other aspects associated with BGP Flow Specification.

The disclosed embodiments may be a system, an apparatus, a method, and/or a computer program product at any possible technical detail level of integration. The computer program product may include a computer readable storage medium (or media) having computer readable program instructions thereon for causing a processor to carry out aspects of the present disclosure. The computer readable storage medium may be a tangible device that can retain and store instructions for use by an instruction execution device.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A method of processing packets implemented by a first node, the method comprising:
storing a Border Gateway Protocol, BGP, flow specification;
receiving a packet from a second node in a network;
performing a BGP flow specification matching process to determine whether the BGP flow specification matches the packet;
encountering a component error with a component in the BGP flow specification during the BGP flow specification matching process;
determining an error handling action to perform for the component based on error handling information stored in or with the BGP flow specification; and
performing the error handling action for the component, wherein the component error occurs when the component has a component type not known to the first node, or when the component has a component type known to the first node and a field that the component type references is absent from data associated with the packet.

2. The method according to claim 1, wherein the error handling action is treating the component as having failed to match the packet.

3. The method according to claim 1, wherein the error handling action is treating the component as having succeeded in matching the packet.

4. The method according to claim 1, wherein the error handling action is skipping that the component and continuing with any subsequent component matching in the BGP flow specification.

5. The method according to claim 1, wherein the component encodes an action to perform when the BGP flow specification matches the packet.

6. The method according to claim 5, wherein the error handling action is skipping to a next action and ignore the component error.

7. The method according to any of claims 1-6, wherein the error handling information comprises a value in a Type-Error field of the component that indicates the error handling action when the component error is that the component has a component type not known to the first node.

8. The method according to any of claims 1-7, wherein the error handling information comprises a value in a Missing-Error field of the component that indicates the error handling action when the component error is that the component has a component type known to the first node and a field that the component type references is absent from data associated with the packet.

9. A network node (1600) comprising at least a processor (1630) and a memory (1660) storing instructions, wherein the instructions when executed by the processor (1630), the processor (1630) is enabled to perform the method according to any one of claims 1-8.

10. A non-transitory computer-readable medium storing computer instructions, that when executed by one or more processors, the one or more processors is enabled to perform the method according to any one of claims 1-8.

## Patentansprüche

1. Verfahren zum Verarbeiten von Paketen, implementiert durch einen ersten Knoten, das Verfahren umfassend:
Speichern einer "Border-Gateway"-Protokoll- bzw. BGP-Flussspezifikation;
Empfangen eines Pakets von einem zweiten Knoten in einem Netzwerk;
Durchführen eines BGP-Flussspezifikation-Abgleichungsprozesses, um zu bestimmen, ob die BGP-Flussspezifikation mit dem Paket übereinstimmt;
Auftreten eines Komponentenfehlers mit einer Komponente in der BGP-Flussspezifikation während des BGP-Flussspezifikation-Abgleichungsprozesses;
Bestimmen einer Fehlerhandhabungsmaßnahme, die für die Komponente durchgeführt werden soll, basierend auf Fehlerhandhabungsinformationen, die in oder mit der BGP-Flussspezifikation gespeichert sind; und
Durchführen der Fehlerhandhabungsmaßnahme für die Komponente, wobei der Komponentenfehler vorkommt, wenn die Komponente einen Komponententyp aufweist, der dem ersten Knoten nicht bekannt ist, oder wenn die Komponente einen Komponententyp aufweist, der dem ersten Knoten bekannt ist, und ein Feld, auf das der Komponententyp verweist, in mit dem Paket assoziierten Daten nicht vorhanden ist.

2. Verfahren nach Anspruch 1, wobei die Fehlerhandhabungsmaßnahme darin besteht, die Komponente so zu behandeln, als hätte sie nicht mit dem Paket übereingestimmt.

3. Verfahren nach Anspruch 1, wobei die Fehlerhandhabungsmaßnahme darin besteht, die Komponente so zu behandeln, als hätte sie erfolgreich mit dem Paket übereingestimmt.

4. Verfahren nach Anspruch 1, wobei die Fehlerhandhabungsmaßnahme darin besteht, diese Komponente zu überspringen und mit einer beliebigen in der BGP-Flussspezifikation übereinstimmenden nachfolgenden Komponente fortzufahren.

5. Verfahren nach Anspruch 1, wobei die Komponente eine Maßnahme codiert, die durchgeführt werden soll, wenn die BGP-Flussspezifikation mit dem Paket übereinstimmt.

6. Verfahren nach Anspruch 5, wobei die Fehlerhandhabungsmaßnahme darin besteht, zu einer nächsten Maßnahme zu springen und den Komponentenfehler zu ignorieren.

7. Verfahren nach einem der Ansprüche 1-6, wobei die Fehlerhandhabungsinformationen einen Wert in einem Typ-Fehler-Feld der Komponente umfassen, der die Fehlerhandhabungsmaßnahme angibt, wenn der Komponentenfehler darin besteht, dass die Komponente einen Komponententyp aufweist, der dem ersten Knoten nicht bekannt ist.

8. Verfahren nach einem der Ansprüche 1-7, wobei die Fehlerhandhabungsinformationen einen Wert in einem Fehlender-Fehler-Feld der Komponente umfassen, der die Fehlerhandhabungsmaßnahme angibt, wenn der Komponentenfehler darin besteht, dass die Komponente einen Komponententyp aufweist, der dem ersten Knoten bekannt ist, und ein Feld, auf das der Komponententyp verweist, in mit dem Paket assoziierten Daten nicht vorhanden ist.

9. Netzwerkknoten (1600), umfassend mindestens einen Prozessor (1630) und einen Speicher (1660), der Anweisungen speichert, wobei die Anweisungen, wenn sie durch den Prozessor (1630) ausgeführt werden, den Prozessor (1630) in die Lage versetzen, das Verfahren nach einem der Ansprüche 1-8 durchzuführen.

10. Nicht-flüchtiges computerlesbares Medium, das Computeranweisungen speichert, die, wenn sie durch einen oder mehrere Prozessoren ausgeführt werden, den einen oder die mehreren Prozessoren in die Lage versetzen, das Verfahren nach einem der Ansprüche 1-8 durchzuführen.

## Revendications

1. Procédé de traitement de paquets implémenté par un premier nœud, le procédé comprenant :
le stockage d'une spécification de flux de protocole de passerelle périphérique, BGP ;
la réception d'un paquet depuis un second nœud dans un réseau ;
la réalisation d'un processus de correspondance de spécification de flux de BGP pour déterminer si la spécification de flux de BGP correspond ou non au paquet ;
la découverte d'une erreur de composant avec un composant dans la spécification de flux de BGP durant le processus de correspondance de spécification de flux de BGP ;
la détermination d'une action de gestion d'erreur à réaliser pour le composant sur la base d'informations de gestion d'erreur stockées dans ou avec la spécification de flux de BGP ; et
la réalisation de l'action de gestion d'erreur pour le composant, dans lequel l'erreur de composant se produit lorsque le composant a un type de composant inconnu du premier nœud, ou lorsque le composant a un type de composant connu du premier nœud et un champ auquel le type de composant fait référence est absent des données associées au paquet.

2. Procédé selon la revendication 1, dans lequel l'action de gestion d'erreur comprend le traitement du composant comme ayant échoué à la correspondance au paquet.

3. Procédé selon la revendication 1, dans lequel l'action de gestion d'erreur comprend le traitement du composant comme ayant réussi la correspondance au paquet.

4. Procédé selon la revendication 1, dans lequel l'action de gestion d'erreur est le saut du composant et la continuation de la correspondance de tout autre composant suivant dans la spécification de flux de BGP.

5. Procédé selon la revendication 1, dans lequel le composant encode une action à réaliser lorsque la spécification de flux de BGP correspond au paquet.

6. Procédé selon la revendication 5, dans lequel l'action de gestion d'erreur saute à une action suivante et ignore l'erreur de composant.

7. Procédé selon l'une quelconque des revendications 1 à 6, dans lequel les informations de gestion d'erreur comprennent une valeur dans un champ de type d'erreur du composant qui indique l'action de gestion d'erreur lorsque l'erreur de composant est que le composant a un type de composant inconnu du premier nœud.

8. Procédé selon l'une quelconque des revendications 1 à 7, dans lequel les informations de gestion d'erreur comprennent une valeur dans un champ d'erreur manquante du composant qui indique l'action de gestion d'erreur lorsque l'erreur de composant est que le composant a un type de composant connu du premier nœud et un champ auquel se réfère le type de composant est absent des données associées au paquet.

9. Nœud de réseau (1600) comprenant au moins un processeur (1630) et une mémoire (1660) stockant des instructions, dans lequel les instructions, une fois exécutées par le processeur (1630), permettent au processeur (1630) de réaliser le procédé selon l'une quelconque des revendications 1 à 8.

10. Support non transitoire lisible par ordinateur stockant des instructions informatiques, qui, une fois exécutées par un ou plusieurs processeurs, permettent aux un ou plusieurs processeurs de réaliser le procédé selon l'une quelconque des revendications 1 à 8.
